# EUROPEAN PATENT APPLICATION

(11) **EP 4 667 250 A1**
(43) Date of publication of application: **24.12.2025**
(21) Application number: 24183454.8
(22) Date of filing: 20.06.2024
(51) Int. Cl.: B60H 1/00, B60S 1/02

(54) **A METHOD FOR CONTROLLING AN AIR-CONDITIONING AND HEATING SYSTEM OF A DRIVING CAB AND ASSOCIATED COMPUTER SYSTEM**

(71) Applicant: VOLVO TRUCK CORPORATION, 405 08 Göteborg (SE)
(72) Inventor: BON, Philippe, 69720 SAINT BONNET DE MURE (FR); QUIBRIAC, Yann, 69007 LYON (FR)
(74) Representative: Lavoix

(57) **Abstract**

The invention concerns a method for controlling an air-conditioning and heating system (48) of a driving cab (12) of a truck (10), comprising the following steps :
a) a first step of determining a status of the driving cab (12), a first status being determined if no driver is present and one opening (36, 40, 44) is opened,
b) if the first status is determined, the method comprising a second step of measuring the exterior ambient temperature,
b1) if the exterior ambient temperature is inside a predetermined range, the method comprising a third step of stopping at least some of the elements of the system (48), or
b2) if the exterior ambient temperature is outside the predetermined range, the method comprising a fourth step of stopping some of the elements of the system (48) and maintaining the functioning of at least one element (50, 52) of the system (48).

## Description

### TECHNICAL FIELD

The disclosure relates generally to air-conditioning and heating systems. In particular aspects, the disclosure relates to a method for controlling an air-conditioning and heating system of a driving cab. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The temperature inside a driving cab is generally regulated by an air-conditioning and heating system. In particular, this system is controlled by a control unit to achieve a targeted temperature in response to a measured temperature, in order to guarantee a comfort of the driver.

However, such an air-conditioning and heating system consumes a lot of energy.

In addition, when a window, door and/or roof hatch is/are opened, the measured temperature decreases (or increases) and thus, in reaction, the air-conditioning and heating system produces more heat/cold to keep the targeted temperature, therefore increasing the energy consumption and limiting the vehicle range.

The invention aims at limiting the energy consumption of the vehicle.

### SUMMARY

According to a first aspect of the disclosure, the invention concerns a method for controlling an air-conditioning and heating system of a driving cab of a truck, the air-conditioning and heating system comprising a plurality of elements, the method comprising the following steps :
a) a first step of determining a status of the driving cab between a first status and a second status, the first status being determined at least if no driver is present in the driving cab and at least one opening of the driving cab is opened, the second status being determined otherwise,
b) if the first status is determined, the method comprising a second step of measuring the exterior ambient temperature and then determining if said exterior ambient temperature is inside or outside a predetermined range extending between a first predetermined value and a second predetermined value,
   b1) if the exterior ambient temperature is inside the predetermined range, the method comprising a third step of stopping at least some of the elements of the air-conditioning and heating system, or
   b2) if the exterior ambient temperature is outside the predetermined range, the method comprising a fourth step of stopping some of the elements of the air-conditioning and heating system and maintaining the functioning of at least one element of the air-conditioning and heating system.

The first aspect of the disclosure allows limiting the use of the air-conditioning and heating system when the window, door or roof hatch is opened and the driver is absent, while maintaining drivable conditions in case of extreme exterior ambient temperature.

Optionally in some examples, including in at least one preferred example, during the third step, all the elements of the air-conditioning and heating system are stopped. A technical benefit may include that the energy consumption is further reduced.

Optionally in some examples, including in at least one preferred example, if the second status is determined during the first step, the method comprises a step of controlling the air-conditioning and heating system to maintain a controlled temperature inside the driving cab. A technical benefit may include that the temperature inside the driving cab is controlled when the driver is present, in order to improve the comfort of the driver. Optionally in some examples, including in at least one preferred example, the air-conditioning and heating system comprises a windshield blower able to blow a heated air flow to a windshield of the driving cab, and during the fourth step, the functioning of said windshield blower is maintained if the exterior ambient temperature is below the first predetermined value. Optionally, the air-conditioning and heating system comprises a windshield heater, during the fourth step the functioning of said windshield heater is maintained if the exterior ambient temperature is below the first predetermined value. A technical benefit may include avoiding the freezing and/or the fogging of the windshield when the exterior ambient temperature is too low.

Optionally in some examples, including in at least one preferred example, the air-conditioning and heating system comprises a main blower able to blow cooled air and in fourth step , the functioning of said main blower is maintained if the exterior ambient temperature is above the second predetermined value. A technical benefit may include avoiding an overheating in the driving cabin when the exterior ambient temperature is too high. For example, this can prevent the contact surfaces of trim elements or of the steering wheel from becoming too hot.

Optionally in some examples, including in at least one preferred example, the first predetermined value is below 10°C, preferably below 5°C. A technical benefit may include that the functioning of at least one element of the air-conditioning and heating system is maintained when the exterior ambient temperature is close to or below that at which the windshield begins to freeze or fog up.

Optionally in some examples, including in at least one preferred example, the second predetermined value is above 25°C, preferably above 30°C. A technical benefit may include that the functioning of at least one element of the air-conditioning and heating system is maintained when the exterior ambient temperature is close to or above that at which the driving cab begins to overheat.

Optionally in some examples, including in at least one preferred example, each one of the openings is formed by a door, a window or a roof hatch of the driving cab. A technical benefit may include that the main openings of the driving cab are taken into account for the determination of the status of the driving cab.

Optionally in some examples, including in at least one preferred example, the driving cab comprises at least one sensor detecting, during the first step, if the corresponding opening is opened. A technical benefit may include that the sensor enables easy detection of whether the corresponding opening is open or closed.

Optionally in some examples, including in at least one preferred example, the first status is determined only if the driving cab is in parking mode. Preferably, the detection that the driving cab is in parking mode is performed by detecting if the parking brake is engaged. A technical benefit may include guarantying that the truck is parked.

Optionally in some examples, including in at least one preferred example, the presence of the driver in the driving cab is detected by a seat sensor and/or a driver monitoring system and/or a pedal motion sensor. A technical benefit may include that each one of these sensors enables easy detection of whether the driver is present in the driving cab or not.

According to a second aspect of the disclosure, the invention concerns a computer system comprising processing circuitry configured to perform the method described above. A technical benefit may include that this computer system could easily be implemented in an electronic control module of a truck, in order to limit the use of the air-conditioning and heating system when the window, door or roof hatch is opened and the driver is absent, while maintaining drivable conditions in case of extreme exterior ambient temperature. This may allow reducing the energy consumption of the truck.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
**FIG. 1** is a schematic view of an exemplary truck comprising a driving cab and ;
**FIG. 2** is a schematic view of the interior of the driving cab of the truck of figure 1.
**FIG. 3** is a system diagram of a computer system according to the invention.
**FIG. 4** is a flow chart of an exemplary method for controlling an air-conditioning and heating system of the driving cab of figure 2, according to the invention.

### DETAILED DESCRIPTION

The detailed description set forth below provides information and examples of the disclosed technology with sufficient detail to enable those skilled in the art to practice the disclosure.

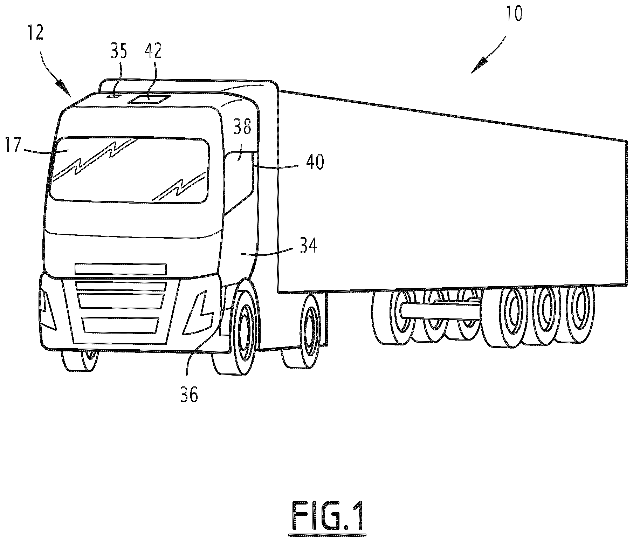

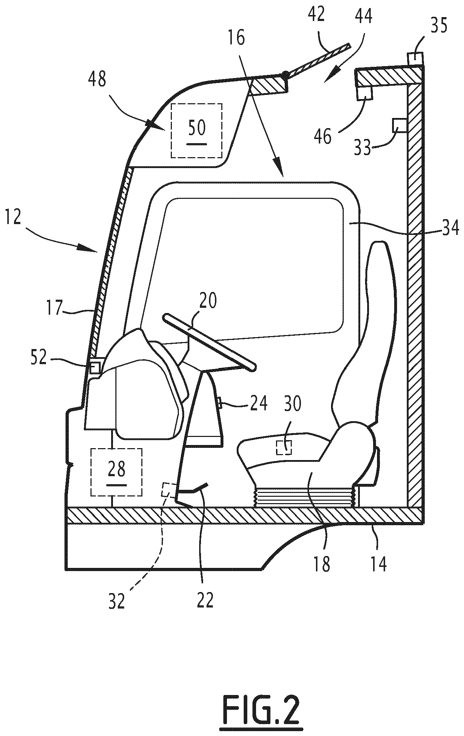

Figure 1 shows a truck 10 comprising a driving cab 12, whose interior is shown in figure 2.

The truck 10 and the corresponding driving cab 12 are described here as example to better understand the method according to the invention described hereinafter.

The driving cab 12 is preferably arranged at the front of the truck 10.

The driving cab 12 comprises for example a chassis 14, forming a rigid framework that supports the other components of the driving cab 12 and that delimits an internal volume 16 of the driving cab 12, in which the driver of the truck 10 may sit to control the driving of the truck 10.

The driving cab 12 also includes a windshield 17 that can be qualified as a front windshield in the sense that it closes the front side of the internal volume 16. The specifics of the windshield 17 are not limiting as long as the windshield 17 allows the driver in the internal volume 16 to observe, through the windshield 17, the area of the space in front of the driving cab 12 and thus in front of the truck 10.

As shown on figure 2, the driving cab 12 comprises, inside the internal volume 16, preferably at least a driver seat 18 and control elements for controlling the driving of the truck 10, such as for example a steering wheel 20, at least one pedal 22 and actuators, including for example a parking brake actuator 24.

The driving cab 12 includes preferably an electronic control module 28 able to control one or more of the electrical systems or subsystems in the truck 10.

The driving cab 12 comprises advantageously numerous sensors connected to the electronic control module 28, in particular to monitor the driving of the truck 10.

More precisely, the driving cab 12 comprises for example a seat sensor 30 able to detect whether the driver is seated on the seat 18 and/or a pedal motion sensor 32 able to detect movements of the pedal 22.

Moreover, the driving cab 12 comprises for example a driver monitoring system (not shown) able to assess the driver's alertness, for example by monitoring the eyelids of the driver.

Preferably, the driving cab 12 comprises also an interior temperature sensor 33 able to measure the temperature Tint inside the internal volume 16 of the driving cab 12, and an exterior temperature sensor 35 able to measure the ambient temperature Text outside the internal volume 16 of the driving cab 12.

The driving cab 12 comprises at least one door 34, and usually two doors 34.

Each of the doors 34 forms a first opening 36, in particular defining a passageway between the exterior and the internal volume 16 when the corresponding door 34 is opened. The specifics of the first opening 36 are not limiting as long as when the corresponding door 34 is opened, a passenger can enter by this first opening 36 inside the internal volume 16 of the driving cab 12.

The driving cab 12 comprises also usually at least one window 38, and usually two windows 38.

Each window 38 forms a second opening 40, in particular defining a passageway between the exterior and the internal volume 16 when the window 38 is opened.

As shown on figure 1, each window 38 is for example part of one of the doors 34, such that the corresponding second opening 40 is included in the corresponding first opening 36.

The driving cab 12 comprises usually a roof hatch 42, in particular defined in the roof of the chassis 14.

As visible on figure 2, the roof hatch 42 forms a third opening 44, in particular defining a passageway between the exterior and the internal volume 16 when the roof hatch 42 is opened.

Preferably, the driving cab 12 comprises, for each of the first 36, second 40 and third 44 openings, a sensor 46 able to detect if the corresponding opening is opened or closed. Only the sensor 46 devoted to the third opening 44 is visible on figure 2, the other ones being located in a part of the driving cab 12 which is not visible on this figure.

Each sensor 46 is preferably in communication with the electronic control module 28, via non represented wire or wireless communication lines.

Moreover, the driving cab 12 comprises an air-conditioning and heating system 48 to cool or heat the internal volume 16 of the driving cab 12.

In particular, the air-conditioning and heating system 48 is controlled by the electronic control module 28.

The air-conditioning and heating system 48 comprises for example a main blower 50 able to blow cooled or heated air inside the internal volume 16.

The air-conditioning and heating system 48 comprises also a windshield blower 52 able to blow heated air to the windshield 17 and/or a windshield heater.

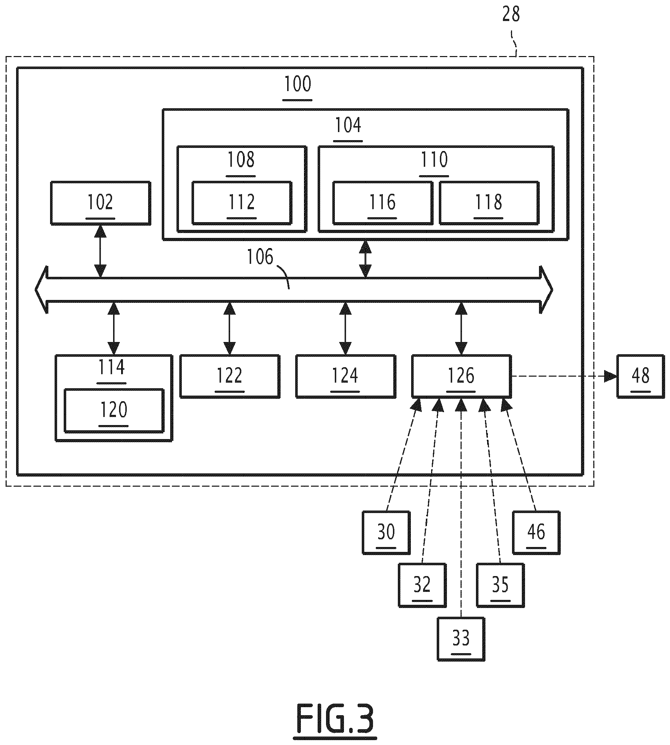

FIG. 3 is a schematic diagram of a computer system 100 for implementing examples disclosed herein.

Preferably, the computer system 100 described hereinafter is part of the electronic control module 28 of the truck 10.

The computer system 100 is adapted to execute instructions from a computer-readable medium to perform these and/or any of the functions or processing described herein. The computer system 100 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 100 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 100 may comprise at least one computing device or electronic device capable of including firmware, hardware, and/or executing software instructions to implement the functionality described herein.

Preferably, the computer system 100 includes processing circuitry 102 (e.g., processing circuitry including one or more processor devices or control units), in particular, configured to perform the method according the invention as will be described later. The computer system 100 may further include a memory 104, and a system bus 106. The computer system 100 may include at least one computing device having the processing circuitry 102. The system bus 106 provides an interface for system components including, but not limited to, the memory 104 and the processing circuitry 102. The processing circuitry 102 may include any number of hardware components for conducting data or signal processing or for executing computer code stored in memory 104. The processing circuitry 102 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 102 may further include computer executable code that controls operation of the programmable device.

The system bus 106 may be any of several types of bus structures that may further interconnect to a memory bus (with or without a memory controller), a peripheral bus, and/or a local bus using any of a variety of bus architectures. The memory 104 may be one or more devices for storing data and/or computer code for completing or facilitating methods described herein. The memory 104 may include database components, object code components, script components, or other types of information structure for supporting the various activities herein. Any distributed or local memory device may be utilized with the systems and methods of this description. The memory 104 may be communicably connected to the processing circuitry 102 (e.g., via a circuit or any other wired, wireless, or network connection) and may include computer code for executing one or more processes described herein. The memory 104 may include non-volatile memory 108 (e.g., read-only memory (ROM), erasable programmable read-only memory (EPROM), electrically erasable programmable read-only memory (EEPROM), etc.), and volatile memory 110 (e.g., random-access memory (RAM)), or any other medium which can be used to carry or store desired program code in the form of machine-executable instructions or data structures and which can be accessed by a computer or other machine with processing circuitry 102. A basic input/output system (BIOS) 112 may be stored in the non-volatile memory 108 and can include the basic routines that help to transfer information between elements within the computer system 100.

The computer system 100 may further include or be coupled to a non-transitory computer-readable storage medium such as the storage device 114, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 114 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 114 and/or in the volatile memory 110, which may include an operating system 116 and/or one or more program modules 118. All or a portion of the examples disclosed herein may be implemented as a computer program 120 stored on a transitory or non-transitory computer-usable or computer-readable storage medium (e.g., single medium or multiple media), such as the storage device 114, which includes complex programming instructions (e.g., complex computer-readable program code) to cause the processing circuitry 102 to carry out actions described herein. Thus, the computer-readable program code of the computer program 120 can comprise software instructions for implementing the functionality of the examples described herein when executed by the processing circuitry 102. In some examples, the storage device 114 may be a computer program product (e.g., readable storage medium) storing the computer program 120 thereon, where at least a portion of a computer program 120 may be loadable (e.g., into a processor) for implementing the functionality of the examples described herein when executed by the processing circuitry 102. The processing circuitry 102 may serve as a controller or control system for the computer system 100 that is to implement the functionality described herein.

The computer system 100 may include an input device interface 122 configured to receive input and selections to be communicated to the computer system 100 when executing instructions, such as from a keyboard, mouse, touch-sensitive surface, etc. Such input devices may be connected to the processing circuitry 102 through the input device interface 122 coupled to the system bus 106 but can be connected through other interfaces, such as a parallel port, an Institute of Electrical and Electronic Engineers (IEEE) 1394 serial port, a Universal Serial Bus (USB) port, an IR interface, and the like. The computer system 100 may include an output device interface 124 configured to forward output, such as to a display, a video display unit (e.g., a liquid crystal display (LCD) or a cathode ray tube (CRT)). The computer system 100 may include a communications interface 126 suitable for communicating with a network as appropriate or desired.

The communication interface 126 is preferably configured to communicate with the sensors 30, 32, 33, 35, 46 of the driving cab 12, and in particular to receive inputs of said sensors.

The communication interface 126 is preferably configured to communicate with the elements of the driving cab 12, and in particular to send command to said elements, for example to the air-conditioning and heating system 48.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

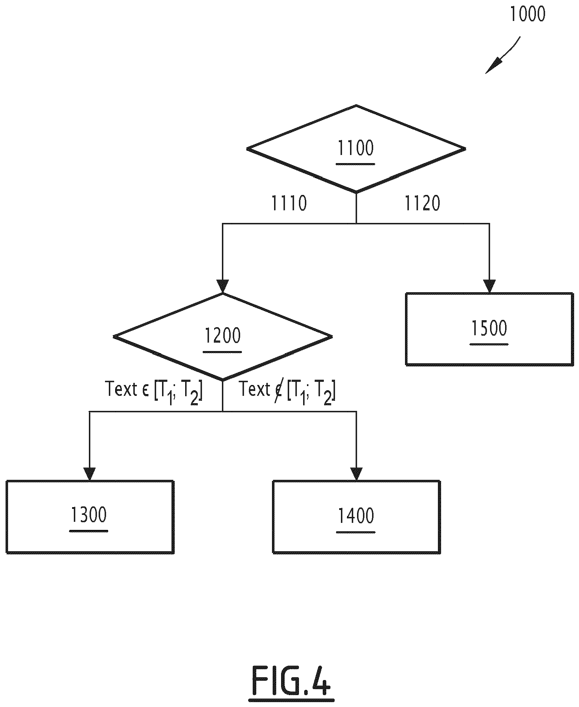

FIG. 4 is a flow chart of an exemplary method 1000 of controlling the air-conditioning and heating system 48 of the driving cab 12.

This method 1000 is preferably performed by the processing circuitry 102 of the computer system 100.

The method 1000 comprises a first step 1100 of determining a status of the driving cab 12 between a first status 1110 and a second status 1120 of the driving cab 12.

In particular, the first status 1110 is determined at least if
- no driver is present in the driving cab 12 and if
- at least one of the openings 36, 40, 44 is opened. The second status 1120 is determined otherwise.

The two conditions to determine the first status 1110 are preferably cumulative. In other words, the first status 1110 is determined only in the event that these two conditions are true. For example, if at least one of the openings 36, 40, 44 is opened, but the driver is present in the driving cab 12, the second status 1120 is determined.

In a preferred embodiment, the first status 1110 is determined only if the driving cab 12 is in parking mode. This third condition is cumulative to the two other conditions.

During the first step 1100, the presence of the driver is for example detected by the seat sensor 30 and/or the driver monitoring system and/or the pedal motion sensor 32.

During the first step 1100, the state of each opening 36, 40, 44 is preferably detected by the corresponding sensor 36.

The detection that the driving cab 12 is in parking mode is preferably performed by detecting if the parking brake is engaged, for example by detecting if the parking brake actuator 24 is activated.

If the first status 1110 is determined, the method 1000 comprises a second step 1200 of measuring the exterior ambient temperature Text and then of determining if said exterior ambient temperature Text is inside or outside a predetermined range [T1; T2] extending between a first predetermined value T1 and a second predetermined value T2.

The exterior ambient temperature Text is preferably measured by the exterior temperature sensor 35.

By "inside the predetermined range [T1; T2]", one means that the measured exterior ambient temperature Text is equal to or above the first predetermined value T1 and equal to or below the second predetermined value T2.

On the contrary, by "outside the predetermined range [T1; T2]", one means that the measured exterior ambient temperature Text is strictly below the first predetermined value T1 or strictly above the second predetermined value T2.

For example, the first predetermined value T1 is below 10°C, preferably below 5°C.

For example, the second predetermined value T2 is above 25°C, preferably above 30°C.

In the event that the first status 1110 is determined at step 1100 and that during the step 1200 it is determined that the exterior ambient temperature Text is inside the predetermined range [T1; T2], the method comprises a third step 1300 of stopping at least some of the elements of the air-conditioning and heating system 48.

By "stopping", one means interrupting the functioning of said elements.

Preferably, during the third step 1300, all the elements of the air-conditioning and heating system 48 are stopped.

In the event that the first status 1110 is determined in step 1100 and that during the step 1200 it is determined that the exterior ambient temperature Text is outside the predetermined range [T1; T2], the method comprises a fourth step 1400 of stopping some of the elements of the air-conditioning and heating system 48, but maintaining the functioning of at least one element 50, 52 of the air-conditioning and heating system 48, in particular in order to maintain drivable conditions.

For example, if the exterior ambient temperature Text is below the first predetermined value T1, the functioning of the windshield blower 52 or the windshield heater is maintained, in order to avoid the fogging of the windshield 17.

For example, if the exterior ambient temperature Text is above the second predetermined value T2, the functioning of the main blower 50 is maintained, preferably in a reduced functioning, in order to avoid overheating in the driving cabin 12.

If the second status 1120 is determined during the first step 1100, the method comprises a step 1500 of controlling the air-conditioning and heating system 48 to maintain a targeted temperature inside the driving cab 12.

Such a method 1000 is particularly advantageous and allows limiting the use of the air-conditioning and heating system when the window, door or roof hatch is opened and the driver is absent, while maintaining drivable conditions.

Indeed, in the event that the first status is detected 1110, the air-conditioning and heating system 48 is stopped in order to reduce unnecessary energy consumption. However, in order to maintain drivable conditions, an exception to this rule is defined by the step 1400 in case of extreme exterior ambient temperature. Thanks to this exception, the truck 10 is ready to be driven under safe driving conditions as soon as the driver returns inside the driving cab 12.

Furthermore, the method 1000 offers the advantage of being suitable to use only components already present in existing trucks.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the figures. It will be understood that these terms and those discussed above are intended to encompass different orientations of the device in addition to the orientation depicted in the figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A method (1000) for controlling an air-conditioning and heating system (48) of a driving cab (12) of a truck (10), the air-conditioning and heating system (48) comprising a plurality of elements, the method comprising the following steps :
a) a first step (1100) of determining a status of the driving cab (12) between a first status (1110) and a second status (1120), the first status (1110) being determined at least if
- no driver is present in the driving cab (12) and
- at least one opening (36, 40, 44) of the driving cab (12) is opened,
the second status (1120) being determined otherwise,
b) if the first status (1110) is determined, the method (1000) comprising a second step (1200) of measuring the exterior ambient temperature (Text) and then determining if said exterior ambient temperature (Text) is inside or outside a predetermined range ([T1; T2]) extending between a first predetermined value (T1) and a second predetermined value (T2),
b1) if the exterior ambient temperature (Text) is inside the predetermined range ([T1; T2]), the method comprising a third step (1300) of stopping at least some of the elements of the air-conditioning and heating system (48), or
b2) if the exterior ambient temperature (Text) is outside the predetermined range ([T1; T2]), the method comprising a fourth step (1400) of stopping some of the elements of the air-conditioning and heating system (48) and maintaining the functioning of at least one element (50, 52) of the air-conditioning and heating system (48).

2. A method (1000) according to claim 1, wherein during the third step (1300), all the elements of the air-conditioning and heating system (48) are stopped.

3. A method (1000) according to claim 1 or 2, wherein if the second status (1120) is determined during the first step (1100), the method (1000) comprises a step (1500) of controlling the air-conditioning and heating system (48) to maintain a controlled temperature inside the driving cab (12).

4. A method (1000) according to any of claims 1 to 3, wherein
- the air-conditioning and heating system (48) comprises a windshield blower (52) able to blow a heated air flow to a windshield (17) of the driving cab (12), and
- during the fourth step (1400), the functioning of said windshield blower (52) is maintained if the exterior ambient temperature (Text) is below the first predetermined value (T1).

5. A method (1000) according to any of claims 1 to 4, wherein
- the air-conditioning and heating system (48) comprises a windshield heater,
- during the fourth step (1400) the functioning of said windshield heater is maintained if the exterior ambient temperature (Text) is below the first predetermined value (T1).

6. A method (1000) according to any of claims 1 to 5, wherein
- the air-conditioning and heating system (48) comprises a main blower (50) able to blow cooled air,
- in fourth step (1400), the functioning of said main blower (50) is maintained if the exterior ambient temperature (Text) is above the second predetermined value (T2).

7. A method (1000) according to any of claims 1 to 6, wherein the first predetermined value (T1) is below 10°C, preferably below 5°C.

8. A method (1000) according to any of claims 1 to 7, wherein the second predetermined value (T2) is above 25°C, preferably above 30°C.

9. A method (1000) according to any of claims 1 to 8, wherein each one of the openings (36, 40, 44) is formed by a door (34), a window (38) or a roof hatch (42) of the driving cab (12).

10. A method (1000) according to any of claims 1 to 9, wherein the driving cab (12) comprises at least one sensor (46) detecting, during the first step (1100), if the corresponding opening (36, 40, 44) is opened.

11. A method (1000) according to any of claims 1 to 10, wherein the first status (1110) is determined only if the driving cab (12) is in parking mode.

12. A method (1000) according to claim 11, wherein the detection that the driving cab (12) is in parking mode is performed by detecting if the parking brake is engaged.

13. A method (1000) according to any of claims 1 to 12, wherein the presence of the driver in the driving cab (12) is detected by a seat sensor (30) and/or a driver monitoring system and/or a pedal motion sensor (32).

14. A computer system comprising processing circuitry configured to perform the method (1000) of any of claims 1 to 13.

## Amended claims

### Amended claims in accordance with Rule 137(2) EPC.

1. A method (1000) for controlling an air-conditioning and heating system (48) of a driving cab (12) of a truck (10), the air-conditioning and heating system (48) comprising a plurality of elements, the method comprising the following steps :
a) a first step (1100) of determining a status of the driving cab (12) between a first status (1110) and a second status (1120), the first status (1110) being determined at least if
- no driver is present in the driving cab (12) and
- at least one opening (36, 40, 44) of the driving cab (12) is opened,
the second status (1120) being determined otherwise,
b) if the first status (1110) is determined, the method (1000) comprising a second step (1200) of measuring the exterior ambient temperature (Text) and then determining if said exterior ambient temperature (Text) is inside or outside a predetermined range ([T1; T2]) extending between a first predetermined value (T1) and a second predetermined value (T2),
b1) if the exterior ambient temperature (Text) is inside the predetermined range ([T1; T2]), the method comprising a third step (1300) of stopping all of the elements of the air-conditioning and heating system (48), or
b2) if the exterior ambient temperature (Text) is outside the predetermined range ([T1; T2]), the method comprising a fourth step (1400) of stopping some of the elements of the air-conditioning and heating system (48) and maintaining the functioning of at least one element (50, 52) of the air-conditioning and heating system (48);
wherein the air-conditioning and heating system (48) comprises a windshield blower (52) able to blow a heated air flow to a windshield (17) of the driving cab (12) and/or a windshield heater, and during the fourth step (1400), the functioning of said windshield blower (52) and/or said windshield heater is maintained if the exterior ambient temperature (Text) is below the first predetermined value (T1).

2. A method (1000) according to claim 1, wherein if the second status (1120) is determined during the first step (1100), the method (1000) comprises a step (1500) of controlling the air-conditioning and heating system (48) to maintain a controlled temperature inside the driving cab (12).

3. A method (1000) according to claim 1 or 2, wherein
- the air-conditioning and heating system (48) comprises a main blower (50) able to blow cooled air,
- in fourth step (1400), the functioning of said main blower (50) is maintained if the exterior ambient temperature (Text) is above the second predetermined value (T2).

4. A method (1000) according to any of claims 1 to 3, wherein the first predetermined value (T1) is below 10°C, preferably below 5°C.

5. A method (1000) according to any of claims 1 to 4, wherein the second predetermined value (T2) is above 25°C, preferably above 30°C.

6. A method (1000) according to any of claims 1 to 5, wherein each one of the openings (36, 40, 44) is formed by a door (34), a window (38) or a roof hatch (42) of the driving cab (12).

7. A method (1000) according to any of claims 1 to 6, wherein the driving cab (12) comprises at least one sensor (46) detecting, during the first step (1100), if the corresponding opening (36, 40, 44) is opened.

8. A method (1000) according to any of claims 1 to 7, wherein the first status (1110) is determined only if the driving cab (12) is in parking mode.

9. A method (1000) according to claim 8, wherein the detection that the driving cab (12) is in parking mode is performed by detecting if the parking brake is engaged.

10. A method (1000) according to any of claims 1 to 9, wherein the presence of the driver in the driving cab (12) is detected by a seat sensor (30) and/or a driver monitoring system and/or a pedal motion sensor (32).

11. A computer system comprising processing circuitry configured to perform the method (1000) of any of claims 1 to 10.
